# EUROPÄISCHE PATENTSCHRIFT

(11) **EP 0 813 994 B1**
(45) Veröffentlichungstag und Bekanntmachung des Hinweises auf die Patenterteilung: **07.05.2003**
(21) Anmeldenummer: 97103213.1
(22) Anmeldetag: 27.02.1997
(51) Int. Cl.: B60Q 1/00

(54) **Befestigungsvorrichtung für einen Lampenträger mit einem Scheinwerfer- oder Leuchtgehäuse**
Fixation device for lampholder with head lamp or light box
Dispositif de fixation pour porte-lampe avec phare ou boîte à lumière

(30) Priorität: 21.06.1996 DE 19624855
(43) Veröffentlichungstag der Anmeldung: 29.12.1997
(73) Patentinhaber: Volkswagen Aktiengesellschaft, 38436 Wolfsburg (DE)
(72) Erfinder: Nitsche, Wolfgang, Dipl.-Ing., 38173 Erkerode (DE)

(56) Entgegenhaltungen:
- EP-A- 0 546 938
- EP-A- 0 586 279
- DE-A- 19 519 655
- DE-A- 19 615 026
- DE-B- 1 049 252
- DE-B- 1 087 476
- FR-A- 2 649 368
- FR-A- 2 685 265
- US-A- 4 704 667
- US-A- 5 047 903

## Beschreibung

Die Erfindung betrifft eine Befestigungsvorrichtung für einen Scheinwerfer- oder eine Leuchte eines Kraftfahrzeuges mit einem Scheinwerfer- oder Leuchtengehäuse und einer eine Lichtaustrittsöffnung des Scheinwerfer- oder Leuchtengehäuse abdeckenden Lichtscheibe, wobei der Scheinwerfer oder die Leuchte in einem Karosserieteil angeordnet ist. Eine Anordnung gemäß dem Oberbegriff von Anspruch 1 ist aus der DE-B-1049252 bekannt. Aus der deutschen Offenlegungsschrift DE 38 36 086 A1 ist eine Befestigungsvorrichtung für einen Fahrzeugscheinwerfer bekannt. Die Spaltweite zwischen den Fahrzeugscheinwerfern und einem angrenzenden Karosserieteil wie z. B. dem Stoßfänger hängt dabei von der Fertigungsgenauigkeit der Befestigung des Stoßfängers und des Fahrzeugscheinwerfers an der Karosserie ab. Die Spaltweite zwischen den Bauteilen im Anschluß an den Zusammenbau kann somit nur indirekt beeinflußt werden.

Aus der deutschen Patentschrift DE 42 39 753 C1 ist die Befestigung einer Blinkleuchte benachbart zu einem Nebelscheinwerfer bekannt. Die Blinkleuchte und der Nebelscheinwerfer sind hier in einer Mulde eines Karosseriebauteiles angeordnet. Das Scheinwerfer- oder Leuchtengehäuse mit den beiden zugeordneten Lichtscheiben ist als gesondertes Bauteil ausgeführt. Die Spaltweiten zwischen dem Stoßfänger und den Lichtscheiben sowie zwischen den Lichtscheiben untereinander sind auch hier abhängig von den Einbautoleranzen und können nicht direkt beeinflußt werden. Jede Leuchte ist hier mit einer eigenen Lichtscheibe ausgestattet, damit ergeben sich zwischen den Lichtscheiben zusätzliche Spalte.

Aufgabe der Erfindung ist es nun einen Scheinwerfer oder eine Leuchte eines Kraftfahrzeuges derart zu verbessern, daß die Spaltweiten zwischen den Lichtscheiben sowie zwischen Scheinwerfer oder Leuchte und angrenzenden Karosserieteilen möglichst gering und unabhängig von Fertigungsungenauigkeiten sind.

Die Aufgabe wird erfindungsgemäß dadurch gelöst, daß das Scheinwerfer- oder Leuchtengehäuse an ein Karosserieteil angeformt ist und das Karosserieteil mit den angrenzenden Karosserieteilen der Karosserieaußenhaut verbindbar ist.

Die Spaltweite zwischen dem Karosserieteil mit angeformten Scheinwerfer- oder Leuchtengehäuse und den angrenzenden Karosserieteilen der Karosserieaußenhaut ist somit nicht mehr von Einbautoleranzen der Karosserieteile an dem Karosserieträger oder anderen innerhalb der Karosserieaußenhaut liegenden Bauteilen des Kraftfahrzeuges abhängig. Die Spaltweiten können nun durch die direkte Verbindung des Karosserieteils mit angeformten Scheinwerfer- oder Leuchtengehäuse mit den angrenzenden Karosserieteilen wie Kotflügel, Stoßfänger etc. auf ein Maß nahe Null reduziert werden. Des weiteren muß das Scheinwerfer- oder Leuchtengehäuse nicht mehr in einem gesonderten Arbeitsgang an einem innenliegenden Bauteil wie z. B. Karosserieträger, Kunststoffmontageträger oder dergleichen befestigt werden.

Zur Vermeidung von unnötigen Spalten zwischen den Leuchten wie z. B. zwischen Blinkleuchte und Fahrleuchte wird erfindungsgemäß die Verwendung einer einteiligen Lichtscheibe vorgeschlagen. Der verbleibende Spalt zwischen der nicht von der Lichtscheibe bedeckten Kante der Nut und der Lichtscheibe kann durch geeignete Mittel wie z. B. einer Gummidichtung im Anschluß an die Montage verschlossen werden.

Auf diese Weise erhält man eine nahezu spaltfreie durchgängige Karosserieoberfläche im Bereich des Fahrzeugscheinwerfers mit besonders guten aerodynamischem und optischen Eigenschaften.

Weiterhin wird erfindungsgemäß vorgeschlagen den Lampenträger zwischen beiden Scheinwerfergehäusen, z. B. unter einem bei Kraftfahrzeugen üblicherweise vorgesehenen Firmenzeichen, mehrteilig und teilbar auszuführen. Dies hat den Vorteil, daß wenn z. B. bei einem Unfall eine Seite des Lampenträgers beschädigt wird, nur die beschädigte Seite ausgewechselt werden muß und nicht der gesamte Lampenträger.

Der Lampenträger kann auch Bestandteil eines bereits existierenden vergrößerten Karosserieteils wie z. B: eines an die Unterkante der Motorhaube angrenzenden Stoßfängers sein. In diesem Fall würde der Lampenträger als gesondertes Karosserieteil der Karosserieaußenhaut entfallen und das Scheinwerfer- oder Leuchtengehäuse direkt an den Stoßfänger angeformt.

Vorteilhafterweise kann das Karosserieteil mit angeformten Scheinwerfer- oder Leuchtengehäuse zur Erhöhung der Stabilität an seiner zum Motorraum gerichteten Seite zusätzlich an einem innerhalb der Karosserieaußenhaut liegenden Bauteil befestigt werden.

Nachfolgend wird die Erfindung anhand eines Ausführungsbeispiels näher beschrieben. Die zugehörigen Zeichnungen zeigen:
- Figur 1: eine Vorderfront eines Kraftfahrzeuges;
- Figur 2: Lampenträger mit angeformten Scheinwerfer- oder Leuchtengehäuse;
- Figur 3: Stoßfänger mit angeformten Scheinwerfer- oder Leuchtengehäuse.

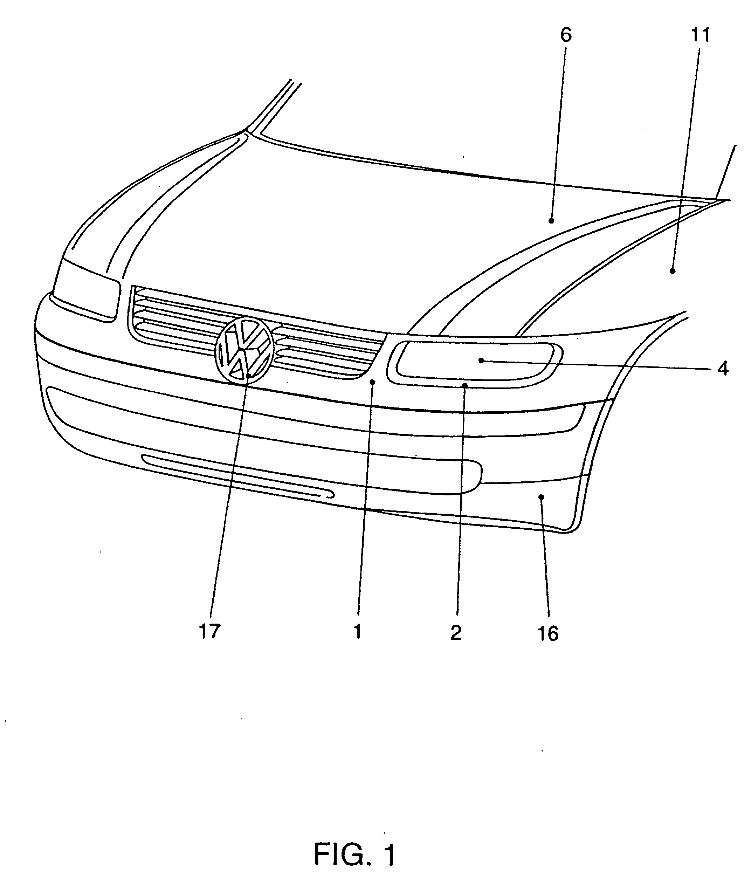

In Figur 1 ist die Vorderfront eines Kraftfahrzeuges zu erkennen. An das Karosserieteil 1 grenzen die Motorhaube 6, der Kotflügel 11 und der Stoßfänger 16. Das Scheinwerfer- oder Leuchtengehäuse 4 ist direkt an das Karosserieteil 1 angeformt.

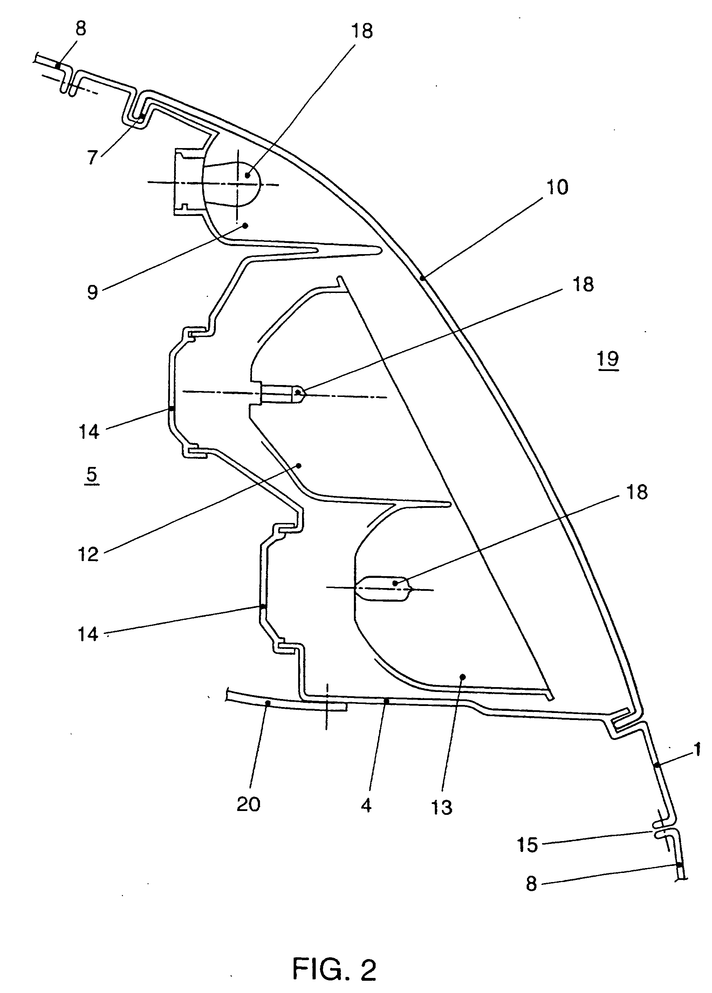

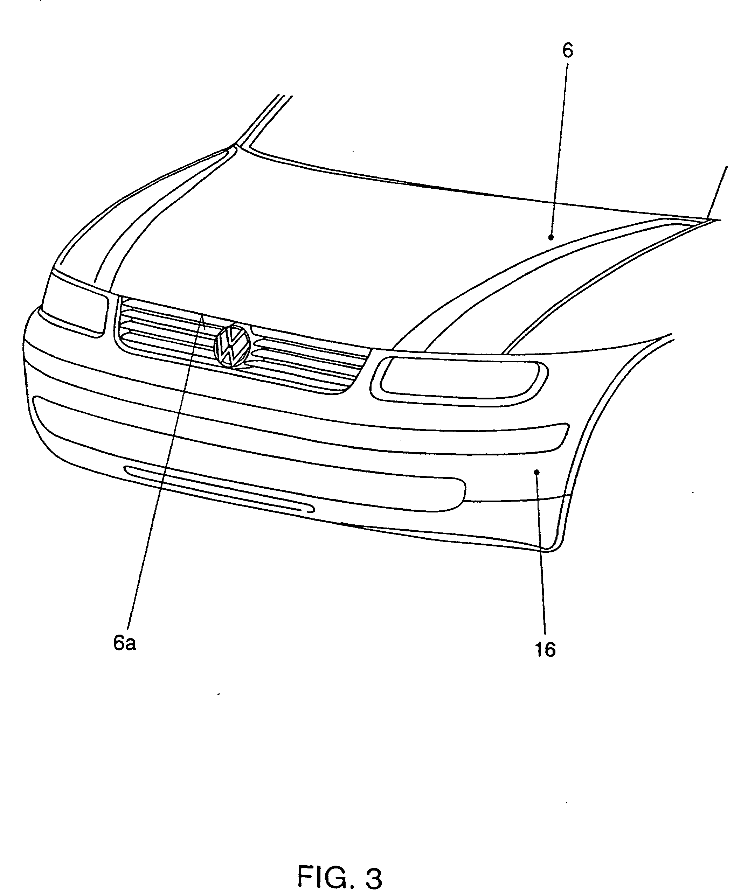

In Figur 2 ist ein Ausführungsbeispiel eines Karosserieteils 1 mit angeformten Scheinwerferoder Leuchtengehäuse 4 dargestellt. In dem Scheinwerfer- oder Leuchtengehäuse 4 sind die Reflektoranordnungen 12 und 13 für das Fern- und Abblendlicht als auch die Blinkleuchte 9 angeordnet. In den Reflektoranordnungen 12 und 13 als auch in der Blinkleuchte 9 sind die Lampen 18 zu erkennen. Das Scheinwerfer- oder Leuchtengehäuse 4 weist an seiner dem Motorinnenraum 5 zugewandten Seite für die beiden Reflektoranordnungen 12 und 13 und die Blinkleuchte 9 einzelne Deckel 14 auf, die zum Austausch der Lampen 18 abnehmbar sind. Die zur Karosserieaußenseite 19 gerichtete Lichtaustrittsöffnung 2 des Scheinwerferoder Leuchtengehäuses 4 ist durch eine einteilig ausgebildete Lichtscheibe 10 abgedeckt. Die Lichtscheibe 10 wird in den zur Karosserieaußenseite 19 geöffnete Nuten 7 durch hier nicht näher gezeigte Mittel gehalten. Die verbleibende Nut zwischen der Lichtscheibe 10 und der nicht von der Lichtscheibe 10 bedeckten Kante der Nut 7 kann bei Bedarf noch zusätzlich durch eine Gummidichtung oder dergleichen abgedichtet werden. An seinem äußeren Rand 15 ist das Karosserieteil 1 mit angeformten Scheinwerfer- oder Leuchtengehäuse 4 mit den angrenzenden Karosserieteilen 8 der Karosserieaußenhaut fest verbunden. Die Verbindungsart ist hier nicht näher dargestellt, aber es wäre z. B. eine Verbindung durch Schrauben, Nieten, Kleben oder Klammern etc. denkbar. Zur Verbesserung der Stabilität ist das Karosserieteil 1 mit angeformten Scheinwerfer- oder Leuchtengehäuse 4 zusätzlich mit einem innerhalb der Karosserieaußenhaut liegenden Bauteil 20 verbunden. Dies kann z. B. ein Kunststoffmontageträger oder ein Karosserieträger sein. Das Karosserieteil 1 mit angeformten Scheinwerfer- oder Leuchtengehäuse 4 ist in Figur 1 zweiteilig ausgebildet. Die Trennfuge zwischen den beiden Teilen des Karosserieteils 1 ist unter einem am frontseitigen Ende des Kraftfahrzeuges angeordneten Firmenzeichen 17 angeordnet. Das Firmenzeichen 17 erstreckt sich nahezu über die gesamte Höhe des Karosserieteils 1 und deckt damit die gesamte Trennfuge ab. In Figur 3 ist der Lampenträger mit Scheinwerfer- oder Leuchtengehäuse direkt an den Stoßfänger 16 angeformt und stellt mit diesem ein Bauteil dar. Der Stoßfänger 16 erstreckt sich dann direkt bis an die Vorderkante 6a der Motorhaube 6.

### BEZUGSZEICHENLISTE

- 1: Karosserieteil
- 2: Lichtaustrittsöffnung
- 4: Scheinwerfer- oder Leuchtengehäuse
- 5: Motorraum
- 6: Motorhaube
- 6a: Vorderkante
- 7: Nut
- 8: Karosserieteil
- 9: Blinkleuchte
- 10: Lichtscheibe
- 11: Kotflügel
- 12: Reflektoranordnung
- 13: Reflektoranordnung
- 14: Deckel
- 15: äußere Rand
- 16: Stoßfänger
- 17: Firmenzeichen
- 18: Lampe
- 19: Karosserieaußenseite
- 20: Bauteil

## Patentansprüche

1. Befestigungsvorrichtung für einen Scheinwerfer oder eine Leuchte eines Kraftfahrzeuges mit einem Scheinwerfer- oder Leuchtengehäuse (4) und einer eine Lichtaustrittsöffnung (2) des Scheinwerfer- oder Leuchtengehäuses (4) abdeckenden Lichtscheibe (10), wobei der Scheinwerfer oder die Leuchte in einem Karosserieteil (1) angeordnet ist, wobei das Scheinwerfer- oder Leuchtengehäuse (4) an das Karosserieteil (1) angeformt ist, **dadurch gekennzeichnet, daß** das Karosserieteil (1) ein Stoßfänger (16) eine Motorhaube (6) eine Heckklappe oder ein Kotflügel eines Kraftfahrzeuges ist.

2. Vorrichtung nach Anspruch 1, **dadurch gekennzeichnet, daß** das Karosserieteil (1) mit einem angrenzenden zweiten Karosserieteil (8) der Karosserieaußenhaut verbindbar ist.

3. Vorrichtung nach Anspruch 1, **dadurch gekennzeichnet, daß** das Karosserieteil (1) an ein angrenzendes zweites Karosserieteil (8) der Karosserieaußenhaut angeformt ist.

4. Vorrichtung nach einem der Ansprüche 1 bis 3, **dadurch gekennzeichnet, daß** die Lichtscheibe (10) einteilig ausgebildet ist, und die gesamte Lichtaustrittsöffnung des Scheinwerfer- oder Leuchtengehäuses (4) abdeckt.

5. Vorrichtung nach einem der Ansprüche 1 bis 4, **dadurch gekennzeichnet, daß** die Lichtscheibe (10) in einer um das Scheinwerfer- oder Leuchtengehäuse (4) umlaufenden nach außen geöffneten Nut in dem Karosserieteil (1) haltbar ist.

6. Vorrichtung nach einem der Ansprüche 1 bis 5, **dadurch gekennzeichnet, daß** das Karosserieteil (1) mehrteilig ausgebildet ist.

7. Vorrichtung nach einem der Ansprüche 1 bis 6, **dadurch gekennzeichnet, daß** das Karosserieteil (1) mit angeformten Scheinwerfer- oder Leuchtengehäuse (4) an einem innerhalb der Karosserieaußenhaut liegenden Bauteil (20) befestigbar ist.

## Claims

1. Fastening device for a headlight or a lamp of a motor vehicle, having a headlight or lamp housing (4) and a light cap (10) covering a light outlet opening (2) of the headlight or lamp housing (4), the headlight or the lamp being arranged in a bodywork part (1), the headlight or lamp housing (4) being integrally formed on the bodywork part (1), **characterized in that** the bodywork part (1) is a bumper (16), an engine bonnet (6), a tailgate or a mudguard of a motor vehicle.

2. Device according to Claim 1, **characterized in that** the bodywork part (1) can be connected to an adjacent, second bodywork part (8) of the outer skin of the bodywork.

3. Device according to Claim 1, **characterized in that** the bodywork part (1) is integrally formed on an adjacent, second bodywork part (8) of the outer skin of the bodywork.

4. Device according to one of Claims 1 to 3, **characterized in that** the light cap (10) is of single-piece design and covers the entire light outlet opening of the headlight or lamp housing (4).

5. Device according to one of Claims 1 to 4, **characterized in that** the light cap (10) can be held in the bodywork part (1) in an outwardly open groove which runs around the headlight or lamp housing (4).

6. Device according to one of Claims 1 to 5, **characterized in that** the bodywork part (1) is of multipart design.

7. Device according to one of Claims 1 to 6, **characterized in that** the bodywork part (1) together with the headlight or lamp housing (4) integrally formed on it can be fastened to a component (20) lying within the outer skin of the bodywork.

## Revendications

1. Dispositif de fixation pour un phare ou un feu d'un véhicule automobile comportant un boîtier de phare ou de feu (4) et une plaque d'éclairage (10) qui recouvre un orifice de sortie de la lumière (2) du boîtier de phare ou de feu (4), le phare ou le feu étant disposé dans un élément de la carrosserie (1), le boîtier de phare ou de feu (4) étant surmoulé sur l'élément de la carrosserie (1), **caractérisé en ce que** l'élément de la carrosserie (1) est un pare-chocs (16), un capot de moteur (6), un hayon ou une aile d'un véhicule automobile.

2. Dispositif selon la revendication 1, **caractérisé en ce que** l'élément de la carrosserie (1) peut être relié avec un deuxième élément de la carrosserie (8) voisin de l'habillage extérieur de la carrosserie.

3. Dispositif selon la revendication 1, **caractérisé en ce que** l'élément de la carrosserie (1) est surmoulé sur un deuxième élément de la carrosserie (8) voisin de l'habillage extérieur de la carrosserie.

4. Dispositif selon l'une des revendications 1 à 3, **caractérisé en ce que** la plaque d'éclairage (10) est constituée d'une seule pièce et recouvre l'ensemble de l'orifice de sortie de la lumière du boîtier de phare ou de feu (4).

5. Dispositif selon l'une des revendications 1 à 4, **caractérisé en ce que** la plaque d'éclairage (10) peut être maintenue dans une rainure ouverte vers l'extérieur dans l'élément de la carrosserie (1) qui s'étend autour du boîtier de phare ou de feu (4).

6. Dispositif selon l'une des revendications 1 à 5, **caractérisé en ce que** l'élément de la carrosserie (1) est constitué de plusieurs pièces.

7. Dispositif selon l'une des revendications 1 à 6, **caractérisé en ce que** l'élément de la carrosserie (1) avec le boîtier de phare ou de feu (4) surmoulé peut être fixé à un composant (20) qui se trouve à l'intérieur de l'habillage extérieur de la carrosserie.
